# EUROPÄISCHE PATENTSCHRIFT

(11) **EP 2 015 997 B1**
(45) Veröffentlichungstag und Bekanntmachung des Hinweises auf die Patenterteilung: **28.04.2010**
(21) Anmeldenummer: 07726679.9
(22) Anmeldetag: 07.03.2007
(51) Int. Cl.: B65B 55/24

(54) **FÜLLMASCHINE FÜR OFFENE, SCHWEIßBARE SÄCKE**
FILLING MACHINE FOR OPEN, WELDABLE SACKS
REMPLISSEUSE POUR SACS OUVERTS SOUDABLES

(30) Priorität: 09.05.2006 DE 102006021850
(43) Veröffentlichungstag der Anmeldung: 21.01.2009
(73) Patentinhaber: Haver & Boecker OHG, 59302 Oelde (DE)
(72) Erfinder: COMBRINK, Alois, 59302 Oelde (DE); VAN BERGEREM, Josef, 59320 Ennigerloh (DE)
(74) Vertreter: Dantz, Jan Henning
(86) Internationale Anmeldenummer: PCT/EP2007/052121
(87) Internationale Veröffentlichungsnummer: WO 2007/128600

(56) Entgegenhaltungen:
- AU-B2- 454 509
- DE-A1- 1 461 919
- DE-U1- 8 211 985
- GB-A- 1 265 892

## Beschreibung

Die Erfindung bezieht sich auf eine Füllmaschine für offene, schweißbare Säcke, mit einem Füllstutzen zum Einfüllen von zur Staubentwicklung neigenden Füllgütern in die angehängten Säcke, bei der Schmutzpartikel mittels wenigstens einer mit Druckluft beaufschlagbaren, vorzugsweise oberhalb des Sackmündungsrandes angeordneten Blasleiste entfernbar sind.

Mittels den in Rede stehenden Füllmaschinen werden unterschiedlichste Füllgüter abgefüllt. Insbesondere pulverförmige Füllgüter neigen während des Füllvorganges zu einer Staubentwicklung. Da bevorzugt Säcke aus einem schweißfähigen Material verwendet werden, ist es zwingend notwendig, dass zumindest die inneren Flächen im Bereich der Schweißnaht frei von Schmutzpartikeln sind, da ansonsten Undichtigkeiten entstehen, durch die Füllgutpartikel austreten könnten.

Um die inneren Flächen des Sackmündungsrandes vor einer Verschmutzung während des Füllvorganges zu schützen, sind konstruktive Maßnahmen am Füllstutzen bekannt. In der Standardausführung ist jeder Füllstutzen mit mindestens einem an eine Entstaubung anschließbaren Absaugstutzen ausgestattet. Dadurch soll auch die Umgebung der Füllmaschine möglichst staubfrei gehalten werden.

Es ist auch bekannt, dass nach dem Abnehmen der gefüllten Säcke vom Füllstutzen bei geschlossenen Klemmbacken der oberhalb dieser Klemmbacken liegende Sackmündungsrand durch eine Blasleiste mit Luft beaufschlagt wird, um die anhaftenden Füllgutpartikel abzutragen.

Insbesondere bei Säcken aus Kunststofffolie ist es unvermeidbar, dass der sogenannte, aus beiden Sackwandungen bestehende Überstand sich oftmals nicht öffnet, so dass die Blasluft nicht auf die Innenflächen auftritt. In diesem Falle erfolgt keine genügende Reinigung.

Es ist ferner bekannt, dass ein Blaselement, vorzugsweise in Form eines Blasfingers, in Längsrichtung des Sackrandes bewegbar ist, so dass der Luftstrahl zwischen den beiden Lagen des Sackmündungsrandes geführt wird. Nachteilig ist bei dieser Anordnung insbesondere, dass der Sacküberstand bereits vorgeöffnet bzw. gespreizt sein muss, damit das Blaselement darin eintauchen kann. Außerdem ist bei dieser Ausführung nachteilig, dass zumindest eine der beiden Seitenfalten nicht ausreichend gereinigt wird. Auch diese Lösung arbeitet in der Praxis deshalb nicht zufriedenstellend.

Aus der DE 82 11 985 U1 ist eine Schließvorrichtung für Beutel aus thermoplastischem Material bekannt, die Metallbänder aufweist, um die zu verschweißenden Beutel oder Säcke zu verschließen. Die Vorrichtung ist mit einem auswechselbaren Schweißkopf ausgestattet. Ferner ist die Vorrichtung zur Entfernung von Staub und Verunreinigungen innerhalb des zu verschweißenden Bereiches mit einer Entstaubungseinrichtung ausgestattet. Dazu wird der Beutel in dem zu verschweißenden Bereich geöffnet, indem er an einem Ansatz vorbeigeführt wird, der mit einer Einkerbung versehen ist. Dadurch wird der zu verschweißende Randbereich des Beutels angehalten, wenn er gegen den Ansatz stößt, wodurch er sich öffnet. Zur Entfernung des Staubes oder sonstiger Verunreinigungen wird durch einen ortsfesten Kanal Luft in den zu verschweißenden Randbereich eingeblasen. Alternativ dazu kann der Beutel auch durch einen keilförmigen Kanal geführt werden, der durch zwei seitliche Leitorgane gebildet ist. In diesen Leitorganen sind Saugöffnungen vorgesehen, um den Beutel zu öffnen. Nach dem Öffnen wird durch eine ortsfeste Düse der Randbereich gereinigt.

Der Erfindung liegt die Aufgabe zugrunde, eine Füllmaschine der eingangs näher beschriebenen Art in konstruktiv einfacher Weise so zu gestalten, dass auch die inneren Flächen der Sackmündungsbereiche oberhalb der Klemmbacken und auch im Bereich der Seitenfalten exakt durch den aus der Blasleiste austretenden Luftstrom gereinigt werden.

Die gestellte Aufgabe wird gelöst, indem die Blasleiste mittels eines Antriebes bewegbar gelagert ist, wobei die Blasleiste mittels des Antriebes mit einer Bewegungskomponente quer oder im Wesentlichen quer zum Sackrand bewegbar ist.

Durch die Beweglichkeit der Blasleiste ist sichergestellt, dass der Sackmündungsrand oberhalb der geschlossenen Klemmbacken durch den einwirkenden Luftstrahl geöffnet wird, so dass der Luftstrahl auf die Innenflächen trifft, wodurch die anhaftenden Staub- oder Schmutzpartikel abgetragen werden. Besonders vorteilhaft ist, dass durch die Veränderung des Luftstrahles auch die Lagen der Seitenfalten voneinander getrennt werden, so dass auch dieser Bereich exakt gereinigt wird. Die einzelnen Folienschichten werden also durch den pendelnden Luftstrom quasi nacheinander aufgeblättert, und durch den so eindringenden Luftstrom gereinigt.

Da die wenigstens eine Blasleiste mittels des Antriebes mit einer Bewegungskomponente quer oder im Wesentlichen quer zum Sackrand (oberhalb desselben) bewegbar ist, führt dies zu einem besonders guten Reinigungsergebnis.

Alternativ oder ergänzend ist es zudem vorteilhaft, wenn die wenigstens eine Blasleiste mittels des Antriebs um eine vorzugsweise ortsfeste, horizontale Achse dreh- bzw. schwenkbar bewegbar ist.

In bevorzugter Ausführung ist vorgesehen, dass die Blasleiste mittels eines Antriebes um eine ortsfeste, horizontale Achse dreh- bzw. schwenkbar ist. Eine dreh- bzw. schwenkbare Bewegung kann auch als eine pendelnde Bewegung ausgeführt werden. Die oszillierende Bewegung ist vorzugsweise eine lineare Bewegung, die durch einen entsprechenden Antrieb erzeugt wird. Diese Bewegungen der Saugleiste bieten den Vorteil, dass der Blasluftstrom während der Reinigungszeit aus verschiedenen Richtungen auf den Folienüberstand trifft und dabei die Öffnung der Lagen voneinander bewirkt, wodurch die Reinigungswirkung erhöht wird. Dabei ist der Antrieb so ausgelegt, dass der Winkel bzw. der lineare Weg einen bestimmten Wert einnimmt oder einstellbar ist.

In einer vorteilhaften konstruktiven Ausführung ist vorgesehen, dass die Blasleiste an wenigstens einem zweiarmigen Hebel befestigt ist, und dass an dem anderen Ende des zweiarmigen Hebels der Antrieb angelenkt ist.

In weiterer Ausgestaltung ist dann noch vorgesehen, dass der Antrieb als Kurbeltrieb ausgebildet ist, und dass das freie Ende der Koppelstange an dem zweiarmigen Hebel bzw. der die Hebel verbindenden Stange angelenkt ist.

Alternativ zu dem Kurbeltrieb könnte der Antrieb auch aus einer steuerbaren, pneumatischen Kolbenzylindereinheit oder einem Elektrozylinder bestehen.

Die Reinigungsvorrichtung ist in bevorzugter Ausführung ein Bauteil der Schweißeinrichtung. Es ist jedoch auch möglich, dass die Blasleiste der Schließvorrichtung bzw. der Schweißvorrichtung vorgeschaltet ist. Vor dem Schließen der Schweißbacken müsste dann die Reinigung erfolgen. Die mittels der erfindungsgemäßen Füllmaschine bevorzugt zu füllenden Säcke sind als Kunststoff-Seitenfaltensäcke ausgebildet. Da insbesondere zur Staubentwicklung neigende Füllgüter abgefüllt werden sollen, ist auch noch vorgesehen, dass der Füllstutzen mit einer Absaugvorrichtung ausgestattet ist, die während des Füllvorganges an eine Vakuumquelle anschließbar ist, so dass die Partikel gezielt rückgeführt werden können, so dass die Umgebung der Füllmaschine so gering wie möglich belastet wird.

Damit beim Reinigen durch Luft kein Produkt aufgewirbelt wird, ist vorgesehen, dass die Reinigungsstation zwei Klemmbacken enthält, die vor dem Reinigungsvorgang das Produkt von der Reinigungsluft abschirmen. Der oberhalb des Füllgutes stehende Bereich des Sackes wird dadurch flachgelegt. Dieser Vorgang wird auch als Abquetschvorgang bezeichnet. Die Klemmbacken sind üblicherweise entweder Stangen mit runden Querschnitten oder Rohre mit kreisringförmigen Querschnitten, damit keine Kanten entstehen, die zu Beschädigungen der Säcke führen könnten. Die Klemmbacken sollten direkt über dem oberen Füllgutspiegel stehen, wenn sie geschlossen sind.

Dem Füllstutzen sind vorzugsweise die für die weitere Behandlung der gefüllten Säcke notwendigen Stationen nachgeschaltet. Es ist deshalb vorgesehen, dass die Füllmaschine mit einem taktweise antreibbaren Förderer ausgestattet ist, der die gefüllten Säcke nach dem Abnehmen vom Füllstutzen aufnimmt.

Anhand der beiliegenden Zeichnung wird die Erfindung noch näher erläutert.

Es zeigt:

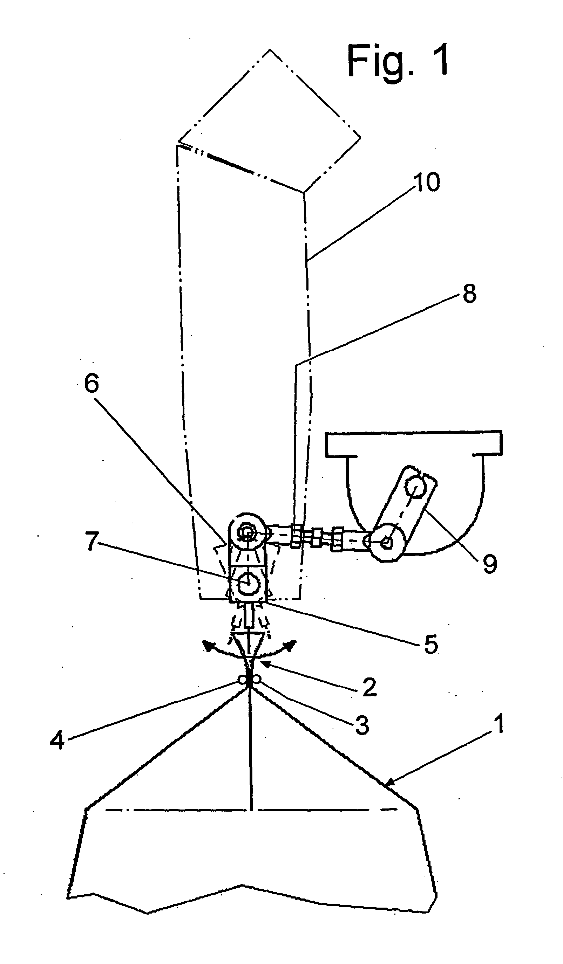

- Figur 1: die mit der Blasleiste ausgerüstete Reinigungsvorrichtung der erfindungsgemäßen Füllmaschine im Aufriss, rein schematisch.

Aus Gründen der vereinfachten Darstellung ist in der Figur 1 nur die Reinigungsvorrichtung der erfindungsgemäßen Füllmaschine dargestellt. Nach dem Abnehmen vom Füllstutzen der Füllmaschine wird der gefüllte Sack 1 aus einem schweißfähigen Material zunächst unterhalb des Sackmündungsrandes 2 durch gesteuerte Klemmbacken 3, 4 abgequetscht, indem diese zusammengefahren werden, und zumindest bewirken, dass die oberen Bereiche der Sackwände am Füllgut anliegen.

Oberhalb der Klemmbacken 3, 4 verbleibt noch ein Überstand des Sackes, an dessen Innenflächen Staub- und Schmutzpartikel haften können. Die Reinigungsvorrichtung beinhaltet eine Blasleiste 5, die mit einer Vielzahl von im Abstand zueinander angeordneten Öffnungen versehen ist, durch die bei Druckluftbeaufschlagung Luftstrahlen austreten. Dadurch wird gemäß der Figur 1 der Sackmündungsrand 2 durch die pendelnde Bewegung aufgespreizt, und, sofern es sich um Seitenfaltensäcke handelt, auch im Bereich der Seitenfalten.

Wie die Figur 1 zeigt, werden die Luftstrahlen während des Blasvorganges aus verschiedenen Richtungen auf die Innenflächen des Sackmündungsrandes 2 geleitet, so dass eine besonders effektive Reinigung erreicht wird. Um die Richtungen der Luftstrahlen zu ändern, ist die Blasleiste 5 im dargestellten Ausführungsbeispiel in nicht näher dargestellter Weise an zwei zweiarmigen Hebeln 6 festgelegt, deren Drehachsen durch das Bezugszeichen 7 gekennzeichnet sind.

Die der Blasleiste 5 gegenüberliegenden Enden sind durch eine Stange miteinander verbunden. Im mittleren Bereich dieser Stange greift die Koppelstange 8 eines Kurbeltriebes an. Das gegenüberliegende Ende der Koppelstange 8 ist an einer Kurbel 9 angelenkt, die in nicht näher dargestellter Weise taktmäßig über einen Antrieb in Drehung versetzbar ist.

Dadurch führen die zweiarmigen Hebel 6 eine Schwenk- oder Pendelbewegung um die ortsfeste Achse 7 durch, so dass auch die Blasleiste 5 entsprechend geschwenkt wird. Die Druckluftzufuhr zur Blasleiste 5 erfolgt durch seitlich angeordnete Anschlüsse. Der Blasleiste 5 ist außerdem noch ein rechteckförmiger Absaugstutzen 10 zugeordnet.

Der nicht dargestellte Sackaufstecker enthält Spreizelemente, um den antransportierten Leersack nach der Voröffnung mittels Saugern aufzuspreizen. Danach wird der Leersack an den Füllstutzen angehängt und durch Klemmbacken festgelegt. Anschließend erfolgt der Füllvorgang und nach dem Abnehmen wird die zuvor beschriebene Reinigungsvorrichtung aktiviert.

Die Pendel- bzw. Schwenkbewegung der Blasleiste 5 kann auch entgegen der Darstellung gemäß der Figur 1 durch einen Linearantrieb erfolgen, der an die zweiarmigen Hebel 6 angelenkt ist. Ein solcher Linearantrieb kann ein Elektrozylinder oder auch eine pneumatisch betriebene Kolbenzylindereinheit sein.

Die Erfindung ist nicht auf das dargestellte Ausführungsbeispiel beschränkt. Wesentlich ist, dass durch eine Schwenkbewegung der Blasleiste 5 die auf die Innenflächen des Sackmündungsrandes 2 gerichteten Luftstrahlen in wechselnden Richtungen auf die Innenflächen auftreffen.

## Patentansprüche

1. Füllmaschine für offene, schweißbare Säcke, mit einem Füllstutzen zum Einfüllen von zur Staubentwicklung neigenden Füllgütern in die angehängten Säcke, bei der Schmutzpartikel mittels wenigstens einer mit Druckluft beaufschlagbaren, vorzugsweise oberhalb des Sackrandes angeordneten Blasleiste (5) entfernbar sind, **dadurch gekennzeichnet, dass** die Blasleiste (5) mittels eines Antriebes (8, 9) bewegbar gelagert ist, wobei die wenigstens eine Blasleiste (5) mittels des Antriebes (8, 9) mit einer Bewegungskomponente quer oder im Wesentlichen quer zum Sackrand bewegbar ist.

2. Füllmaschine nach Anspruch 1, **dadurch gekennzeichnet, dass** die wenigstens eine Blasleiste (5) mittels des Antriebes (8, 9) um eine vorzugsweise ortsfeste, horizontale Achse (7) dreh- bzw. schwenkbar bewegbar ist.

3. Füllmaschine nach Anspruch 1 oder 2, **dadurch gekennzeichnet, dass** die Blasleiste (5) an wenigstens einem zweiarmigen Hebel (6) befestigt ist, und dass an dem anderen Ende des zweiarmigen Hebels der Antrieb (8, 9) angelenkt ist.

4. Füllmaschine nach einem oder mehreren der vorstehenden Ansprüche, **dadurch gekennzeichnet, dass** der Antrieb als Kurbeltrieb (8, 9) ausgebildet ist.

5. Füllmaschine nach einem oder mehreren der vorstehenden Ansprüche, **dadurch gekennzeichnet, dass** der Antrieb als Linearantrieb, vorzugsweise in Form eines Elektrozylinders oder einer pneumatisch arbeitenden Kolbenzylindereinheit ausgebildet ist.

6. Füllmaschine nach einem oder mehreren der vorstehenden Ansprüche, **dadurch gekennzeichnet, dass** die Reinigungsvorrichtung Bestandteil der Schweißvorrichtung ist.

7. Füllmaschine nach einem oder mehreren der vorstehenden Ansprüche, **dadurch gekennzeichnet, dass** die Reinigungsvorrichtung als selbständige Station ausgebildet ist, die der Schweißvorrichtung vorgeschaltet ist.

8. Füllmaschine nach einem oder mehreren der vorstehenden Ansprüche, **dadurch gekennzeichnet, dass** die Füllmaschine zum Abtransport der gefüllten Säcke mit einem taktweise angetriebenen Förderer ausgestattet ist.

## Claims

1. Filling machine which is intended for filling open, weldable sacks (or bags), has a filling nozzle by means of which contents which tend to form dust are introduced into the attached sacks and in which particles of dirt can be removed by means of at least one blowing strip (5) which can be subjected to the action of compressed air and is arranged preferably above the sack periphery, **characterized in that** the blowing strip (5) is mounted in a movable manner by means of a drive (8, 9), it being possible for the at least one blowing strip (5) to be moved, by means of the drive (8, 9), with a movement component in the direction transverse, or substantially transverse, to the sack periphery.

2. Filling machine according to Claim 1,
**characterized in that** the at least one blowing strip (5) can be moved in a rotatable or pivotable manner about a preferably stationary, horizontal axis (7) by means of the drive (8, 9).

3. Filling machine according to Claim 1 or 2,
**characterized in that** the blowing strip (5) is fastened on at least one two-armed lever (6), and **in that** the drive (8, 9) is articulated at the other end of the two-armed lever.

4. Filling machine according to one or more of the preceding claims, **characterized in that** the drive is designed as a crank drive (8, 9).

5. Filling machine according to one or more of the preceding claims, **characterized in that** the drive is designed as a linear drive, preferably in the form of an electric cylinder or of a pneumatically operating piston/cylinder unit.

6. Filling machine according to one or more of the preceding claims, **characterized in that** the cleaning device is a constituent part of the welding device.

7. Filling machine according to one or more of the preceding claims, **characterized in that** the cleaning device is designed as an independent station which is arranged upstream of the welding device.

8. Filling machine according to one or more of the preceding claims, **characterized in that** the filling machine is provided with a cyclically driven conveyor for the purpose of removing the filled sacks.

## Revendications

1. Remplisseuse pour sacs ouverts, pouvant être soudés, avec une tubulure pour le remplissage de produits à remplir sujets au dégagement de poussières dans les sacs suspendus, pour laquelle des particules d'impureté peuvent être retirées à l'aide d'au moins une baguette de soufflage (5) disposée de préférence au-dessus du bord de sac, pouvant être alimentée en air comprimé, **caractérisée en ce que** la baguette de soufflage (5) est logée de manière mobile au moyen d'un entraînement (8, 9), l'au moins une baguette de soufflage (5) pouvant être déplacée au moyen de l'entraînement (8, 9) avec un composant de déplacement transversalement ou essentiellement transversalement au bord de sac.

2. Remplisseuse selon la revendication 1, **caractérisée en ce que** l'au moins une baguette de soufflage (5) peut être déplacée à l'aide de l'entraînement (8, 9) de manière rotative ou pivotante autour d'un axe (7) horizontal, de préférence fixe.

3. Remplisseuse selon la revendication 1 ou 2, **caractérisée en ce que** la baguette de soufflage (5) est fixée sur au moins un levier à deux bras (6) et **en ce qu'**à l'autre extrémité du levier à deux bras est articulé l'entraînement (8, 9).

4. Remplisseuse selon l'une ou plusieurs quelconques des revendications précédentes, **caractérisée en ce que** l'entraînement est réalisée comme une transmission à manivelle (8, 9).

5. Remplisseuse selon l'une ou plusieurs quelconques des revendications précédentes, **caractérisée en ce que** l'entraînement est réalisé comme un entraînement linéaire, de préférence sous la forme d'un cylindre électrique ou d'une unité à piston et cylindre fonctionnant pneumatiquement.

6. Remplisseuse selon l'une ou plusieurs quelconques des revendications précédentes, **caractérisée en ce que** le dispositif de nettoyage est un composant du dispositif de soudage.

7. Remplisseuse selon l'une ou plusieurs quelconques des revendications précédentes, **caractérisée en ce que** le dispositif de nettoyage est réalisé comme un poste autonome qui est monté en amont du dispositif de soudage.

8. Remplisseuse selon l'une ou plusieurs quelconques des revendications précédentes, **caractérisée en ce que** la remplisseuse est équipée pour le transport des sacs remplis d'un convoyeur entraîné en cadence.
